Europäisches Patentamt

European Patent Office

Office européen des brevets

(11) Publication number: **0 161 057**
**B1**

# EUROPEAN PATENT SPECIFICATION

(45) Date of publication of patent specification: **20.07.88**

(51) Int. Cl.⁴: **A 61 C 15/02**

(21) Application number: **85302268.9**

(22) Date of filing: **01.04.85**

(54) Toothpicks.

(30) Priority: **02.04.84 GB 8408424**

(43) Date of publication of application:
**13.11.85 Bulletin 85/46**

(45) Publication of the grant of the patent:
**20.07.88 Bulletin 88/29**

(84) Designated Contracting States:
**AT BE CH DE FR GB IT LI LU NL SE**

(56) References cited:
**BE-A- 528 789**
**CH-A- 500 708**
**DE-B-1 050 502**
**FR-A-2 341 301**
**US-A-3 078 856**

(73) Proprietor: **Grosse, Maurice**
**25, Woodberry Crescent Muswell Hill**
**London N10 1PJ (GB)**

(72) Inventor: **Grosse, Maurice**
**25, Woodberry Crescent Muswell Hill**
**London N10 1PJ (GB)**

(74) Representative: **Walter, Douglas Ernest et al**
**HASELTINE LAKE & CO. 28, Southampton**
**Buildings**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to toothpicks and it is noted that the term "toothpick(s)" is intended, in this document, to include not only the traditional toothpick designed to remove food particles from between the teeth, after eating, but also articles resembling toothpicks that are designed to promote a healthy gum condition by massaging the gums using a more or less reciprocatory action between the teeth.

An object of the invention is the production of simple and inexpensive toothpicks which are of uniform construction and effect, such toothpicks advantageously, but not essentially, being supplied in a hygienically enclosed form that facilitates carrying thereof in a clean condition in a pocket, handbag or the like and the supply thereof in bars, public houses and the like accompanied by pictures and/or wording advertising the premises where the toothpicks are furnished and/or the organisation which provides them. Usually, but not always, the toothpicks will be supplied as inexpensive "give away" items.

Traditional toothpicks, formed from wood, tend to suffer from the inevitable disadvantage of natural material in being non-uniform in texture and hardness and numerous attempts have been made to overcome this difficulty by forming toothpicks from a synthetic material of uniform consistency and particularly a synthetic plastics material. Whilst this, at first, would appear to be relatively easy, that is very far from being the case. To be commercially acceptable, a synthetic plastics toothpick must have a sufficiently hard point or tip to enable it to remove particles of food from between all of the teeth after a meal whilst having sufficient resilient lateral compressibility to enable it to pass through a gap between two teeth where that gap is of smaller width than that of the toothpick itself when initially uncompressed. The synthetic plastics toothpicks that have so far been provided either break up prematurely and/or are of such great lateral rigidity that they will not pass through narrow gaps between teeth. It is for this reason that synthetic plastics toothpicks have not really met with any commercial success. A good example of a document which discloses a number of different synthetic plastics toothpicks, all of which suffer from at least one of the disadvantages that have been briefly discussed, is US—A—3590814 and reference to that patent specification may be made to ascertain the state of the art from which the present invention proceeds.

According to the invention, there is provided a toothpick comprising a body of substantially planar configuration formed substantially wholly from crystal polystyrene and high density polystyrene closed cell foams, the body being flanked at at least one side by a compressible synthetic plastics skin having a substantially smooth outer surface and being provided with a point which is produced by tapering the or each skin of the body towards one end of the toothpick, characterised in that the or each skin is fused around the edge of the body in the region of said one end of the toothpick where said point is formed.

Advantageous, but not essentially, a toothpick in accordance with the invention may be one of a number of identical toothpicks arranged inside a holder with the whole assembly having a size, construction and shape approximately equivalent to that of a standard book of matches.

For a better understanding of the invention, and to show how the same may be carried into effect, reference will now be made, by way of example, to the accompanying drawings, in which:—

Figure 1 is a perspective view of five interconnected toothpicks in accordance with the invention that are constructed and arranged to be retained in a holder, and

Figure 2 is a perspective view showing said toothpicks mounted in the holder.

Referring to the accompanying drawings, the five toothpicks 1 that are illustrated each comprise a body 2 of planar or substantially planar configuration having a thickness of between substantially 2.0 and substantially 3.0 mms., the toothpicks 1 being formed substantially wholly from crystal polystyrene and high density polystyrene closed cell foams, and it being greatly preferred that the latter foam should be a gas-injected closed cell expanded polystyrene foam of relatively small cell size with the cells closely adjacent to each other. The foam advantageously has a density of substantially sixty-six kilograms per cubic metre.

Both flat sides of the pointed body 2 are flanked by a corresponding compressible synthetic plastics skin 4 having a substantially smooth outer surface. It is greatly preferred that each compressible skin 4 should be of laminar formation, being initially applied to the main body 2 as a liquid coating of high density polystyrene foam. Although it is preferred to provide the skin 4 at each side of the body 2 of each toothpick 1, this is not essential and it is within the scope of the invention to furnish the skin 4 at only one flat side of the toothpick body 2. Moreover, although polystyrene is greatly preferred as the polymeric material for the skins 4, this is not absolutely essential and some other synthetic plastics material, such as polyethylene or polypropylene, could be employed provided it can be supplied in a quality or grade that will have the required longitudinal rigidity combined with the required lateral compressibility. A skin thickness of substantially 0.15 mms is preferred whatever polymer is employed.

As previously mentioned, the skins 4 are in the form of laminar layers and, during the manufacture of the toothpicks 1, they are permanently secured to the opposite surfaces of the bodies 2 by a non-toxic thermo-setting adhesive or, preferably, by synthetic plastics welding. The toothpicks 1 are produced by a press tool using heat, pressure and cutting.

At its upper end, as shown in the drawings, each body 2 terminates in a rounded and flattened point 3 which is of sufficient rigidity and durability to remove food particles from all of the teeth after a meal, the resilient compressibility of each toothpick being such that said toothpick will have a polishing action upon the teeth and a massaging action upon the gums. It can be seen in the drawings that the point 3 of each toothpick 1 is produced by tapering the or each skin 4 towards one end of the toothpick body 2 and fusing that body 2, with the or each skin 4, around the edge thereof in the region of said one end. As can be seen in the drawings, it is preferred to continue the fusion further towards the handle end of each toothpick 1 at one edge thereof than at the other, the rounded tip of each point 3 preferably, as illustrated, being spaced by a short distance from the longitudinal axis of the toothpick concerned towards that edge thereof where the fusion extends a shorter distance around said edge towards the handle end of the toothpick.

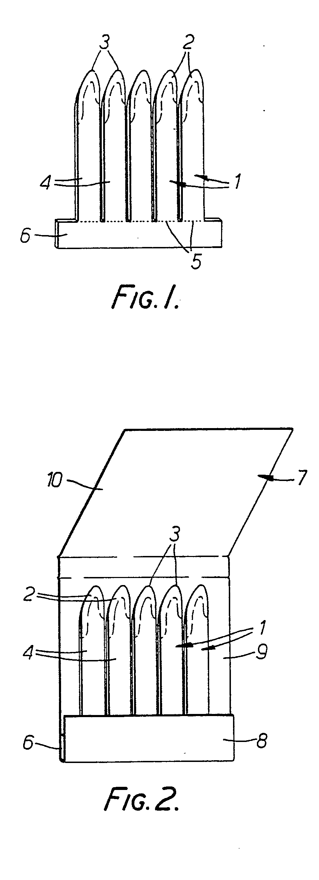

The lower or handle ends of the five illustrated toothpicks 1 are all joined by score lines 5 to a common base strip 6 and it will be apparent from Figure 1 that the base strip 6 is produced integrally with the bodies 2 of the five toothpicks 1.

Figure 2 shows a complete assembly comprising five toothpicks in accordance with the invention, the toothpicks 1 being enclosed in a holder 7 that is shown in Figure 2 in an open condition. It will be readily apparent that the holder 7 is similar in many ways, including size, to the conventional cover of a book of matches, said holder 7 merely comprising a rectangular blank formed with four parallel fold lines that will all extend horizontally parallel to one another when the toothpicks 1 are vertically disposed. The base strip 6 lies just above the two lowermost fold lines as shown in Figure 2 of the drawings between a lower flap 8 of the holder 7 and the back 9 thereof, said base strip 6 being fixedly secured internally of the holder between the flap 8 and back 9 by a strong glue or, if preferred, by conventional staples extending through the parts 8, 6 and 9. The dimensions are such that, when a front flap 10 is turned downwardly about he upper two fold lines from the open position shown in Figure 2 to a closed position, its lower edge (the upper edge as seen in Figure 2) can be entered retainingly behind the upper edge of the flap 8 to lie between that flap 8 and the fronts of the toothpicks 1 and their interconnecting base strip 6.

The holder 7 may be made from suitably glazed relatively thin paperboard, carboard or the like and, since the complete toothpick assemblies are intended primarily, but not exclusively, for use as "give away" items in bars, public houses, hotels and so on, any or all of the surfaces thereof may carry pictures and/or wording advertising the premises from which the assemblies are supplied and/or the company or other organisation which actually provides them. This way of using the assemblies is not, of course, essential and they may additionally or alternatively be produced for commercial sale. It is also not essential that the holder 7 should be similar to that of a book of matches and other substantially surrounding holders may be employed, particularly for purposes of commercial sale.

It has been found that a maximum thickness of each toothpick of between substantially 2.0 mms, and substantially 3.0 mms. is particularly advantageous and it will be noted from the drawings that the point 3 at the upper (as illustrated) end of each elongate toothpick 1 is afforded not only by rounding that end of the corcesponding body 2 but also by the fact that, towards the point 3, the corresponding smooth outer skins 4 are of tapering thickness and merge into the opposite side surfaces of the corresponding bodies 2 before the points 3 are reached. This strong and durable construction is produced by fusing the skins 4 to one another and to the corresponding toothpick bodies 2, those bodies themselves also being fusably connected to the skins 4. As mentioned above, the skins 4 are fused together, and to the body 2 of each toothpick 1, not only at the extremity of the point 3 concerned, but also for some distance around each longitudinal edge away from the tip of the point 3 concerned. The bodies 2 and fusibly united outer skins 4 are compressed, as regards their thicknesses, in the regions of the points 3 and this tapered construction facilitates penetration of the point 3 between teeth followed by penetration of the compressible bodies 2 and their substantially smooth outer skins 4. The construction of each toothpick 1 greatly facilitates its use in being pushed between the teeth both to remove stubbornly adhering pieces of food and to polish the teeth and massage the gums. It is between the teeth where oral bacteria commonly increase with a tendency towards gum inflammation and reduced health of both the gums and the teeth which they carry. The fact that each toothpick 1 has a rounded but strong and durable relatively thin point 3 backed up by a longitudinally strong but laterally compressible body 2 with a smooth outer surface provided by the opposed skins 4 allows the toothpicks 1 readily to be pushed through narrow gaps between the teeth, each toothpick 1 almost always having sufficient strength for a single cleaning operation of all the teeth without premature breakage.

The particular shape of the pointed end 3 of each toothpick 1 that is illustrated is not essential and other shapes may, if preferred, be employed. For example, a more sharply pointed end may be used and/or one edge of each body 2 may be straight whilst the opposite edge thereof curves convexly to meet it at a location corresponding to one of the points 3, which location will thus be in line with said straight edge of the body 2 concerned.

When a user wishes to employ one of the toothpicks 1, it is only necessary to open the protective cover 7 in the same way as a conventional book of matches is opened and to tear the chosen toothpick 1 from the common base strip 6 along the corresponding score line 5. After use, the toothpick can be quickly and easily disposed of in a litter bin or the like. The holder 7 can be reclosed to allow the whole toothpick assembly to be carried in a pocket, handbag or the like until again required for use. The strength of the holder 7 will almost always be sufficient to last until all of the toothpicks 1 have been used. It is, of course, possible to have a shorter or longer base strip 6 to which a lesser or greater number than five of the toothpicks 1 are integrally but detachably secured. The holder 7 may, when required, be made from a synthetic plastics or other material that is of greater strength and durability than glazed paperboard or cardboard although one of the latter is preferred from the point of view of cost. The toothpicks 1 may, if desired, be impregnated with an oral antiseptic, particularly if they are to be used primarily for gum treatment rather than the removal of food particles.

An alternative method of providing a plurality of the toothpicks 1 in an interconnected form is to produce them in strips with each toothpice tear-ably joined to identical ones either successively "point 3 to handle end" with each toothpick in the strip similarly oriented or alternatively "point 3 to point 3 and handle end to handle end" with each toothpick 1 in the longitudinal strip reversed relative to both its immediate neighbours. With appropriate point shaping, little, if any, wastage due to interconnecting material occurs.

If preferred, the toothpicks 1 may be provided singly under which circumstances it is desirable, although it is not absolutely essential, to locate each such individual toothpick 1 in a closed sleeve that can be torn open by a user when he/she needs that toothpick. Any such sleeve may carry advertising material and is preferably, although not essentially, at least partially transparent so that the toothpick located inside it can readily be seen from the exterior. Sterilization of individual toothpicks contained within at least partially transparent sleeves may conveniently be. effected, at the packing stage, by exposing the filled and sealed sleeves to ultra violet light in a manner that is known *per se*. Packages of, for example, a large number of toothpicks formed together in strips or contained in the described holders 7 at least some of which accordingly are not visible from the exteriors of those packages may be sterilized by exposing them, in a manner which is also known *per se* to a source of Gamma radiation.

## Claims

1. A toothpick (1) comprising a body (2) of substantially planar configuration formed substantially wholly from crystal polystyrene and high density polystyrene closed cell foams, the body (2) being flanked at at least one side by a compressible, synthetic plastics skin having a substantially smooth outer surface and being provided with a point (3) which is produced by tapering the or each skin (4) of the body (2) towards one end of the toothpick (1) characterised in that the or each skin (4) is fused around the edge of the bdoy (2) in the region of said one end of the toothpick (1) where said point (3) is formed.

2. A toothpick according to claim 1, characterised in that both lateral sides of the body (2) are provided with a corresponding skin (4), and in that the material destined to form said skins (4) is high density polystyrene foam initially applied to the toothpick body (2) in liquid form.

3. A toothpick according to Claim 1 or 2, characterised in that said point (3) is rounded.

4. A toothpick according to any preceding claim, characterised in that the fusion of the or each skin (4) in the region of the pointed end (3) of the toothpick is continued along the opposite edges of the toothpick body (2) towards a handle end thereof.

5. A toothpick according to Claim 4, characterised in that the fusion is extended from the point (3) towards the handle end of the toothpick further along one edge thereof than along the other edge.

6. A toothpick according to any preceding claim, characterised in that it forms one of a number of substantially identical toothpicks whose handle ends are all connected to a common base strip (6).

7. A toothpick according to Claim 6, characterised in that its handle end is connected to said common base strip by a score line (5).

8. A toothpick according to Claim 6 or 7, characterised in that said number of substantially identical toothpicks, of which it forms one, are accommodated in a protective holder (7).

9. A toothpick according to Claim 8, characterised in that said holder (7) is formed from foldable material and has a construction, size and shape analogous to that of a "book of matches".

10. A toothpick according to any preceding claim, characterised in that it has an initial laterally uncompressed thickness of between sub-stnatially 2.0 mms and substantially 3.0 mms.

## Patentansprüche

1. Ein Zahnstocher (1) mit einem Körper (2) von im wesentlichen ebener Form, der im wesentlichen ganz aus Kristallpolystyrol- und Polystyrolschaumstoffen hoher Dichte mit geschlossenen Zellen besteht, wobei der Körper (2) an mindestens einer Seite mit einer koprimierbaren Kunststoffhaut versehen ist, die eine im wesentlichen glatte äußere Oberfläche aufweist und eine Spitze (3) besitzt, die durch Verjüngen der oder jeder Haut (4) des Körpers (2) auf ein Ende des Zahnstochers (1) zu gebildet wird, dadurch gekennzeichnet, daß die oder jede Haut (4) in dem Bereich des besagten einen Endes de Zahnstochers (1) wo die besagte Spitze (3) gebildet wird, um den Rand des Körpers (2) herum verschmolzen wird.

2. Ein Zahnstocher im Einklang mit Anspruch 1, dadurch gekennzeichnet, daß beide laterale Seiten des Körpers (2) mit einer entsprechenden Haut (4) versehen sind, sowie dadurch, daß der zum Bilden der besagten Häute (4) bestimmte Werkstoff Polystyrolschaumstoff hoher Dichte ist, der ursprünglich in flüssiger Form auf den Körper (2) des Zahnstochers aufgetragen wurde.

3. Ein Zahnstocher im Einklang mit Anspruch 1 oder 2, dadurch gekennzeichnet, daß die besagte Spitze (3) gerundet ist.

4. Ein Zahnstocher im Einklang mit einem der vorhergehenden Ansprüche, dadurch gekennzeichnet, daß die Verschmelzung der oder jeder Haut (4) im Bereich des zugespitzten Endes (3) des Zahnstochers entlang der gegenüberliegenden Ränder des Körpers (2) des Zahnstochers auf dessen Griffende zu fortgesetzt wird.

5. Ein Zahnstocher im Einklang mit Anspruch 4, dadurch gekennzeichnet, daß die Verschmelzung von der Spitze (3) auf das Griffende des Zahnstochers zu sich entlang eines Randes davon weiter erstreckt als entlang des anderen Randes.

6. Ein Zahnstocher im Einklang mit einem der vorhergehenden Ansprüche, dadurch gekennzeichnet, daß er einen von einer Reihe im wesentlichen identischen Zahnstocher bildet, deren Griffenden alle an einem gemeinsamen Grundstreifen (6) anschließen.

7. Ein Zahnstocher im Einklang mit Anspruch 6, dadurch gekennzeichnet, daß sein Griffende durch eine geritzte Linie (5) mit dem besagten gemeinsamen Grundstreifen verbunden ist.

8. Ein Zahnstocker im Einklang mit Anspruch 6 oder 7, dadurch gekennzeichnet, daß die besagte Reihe von im wesentlichen identischen Zahnstochern, von der er einen bildet, in einem Schutzbehälter (7) untergebracht ist.

9. Ein Zahnstocher im Einklang mit Anspruch 8, dadurch gekennzeichnet, daß der besagte Behälter (7) aus faltbarem Material besteht und daß sein Aufbau, seine Größe une seine Form mit jenen eines "Streichholzheftchens" analog sind.

10. Ein Zahnstocher im Einklang mit einem der vorhergehenden Ansprüche, dadurch gekennzeichnet, daß er eine anfängliche seitlich nicht komprimierte Dicke von zwischen im wesentlichen 2,0 mm und im wesentlichen 3,0 mm aufweist.

**Revendications**

1. Un cure-dents (1) composé d'un corps (2) présentant une configuration essentiellement plane et intégralement formé de mousses à cellules formées de polystyrène cristallin et de polystyrène à haute densité, le corps (2) étant bordé tout au moins sur un côté par une peau de plastique synthétique compressible offrant une surface extérieure essentiellement lisse et se terminant en une pointe (3) produite par l'effilement progressif de la peau ou de chaque peau (4) du corps (2) vers un extrémité du cure-dents (1), caractérisé par le fait que la peau ou que chaque peau (4) est moulée autour du bord du corps (2) près de ladite extrémité du cure-dents (1) où est formée ladite pointe (3).

2. Un cure-dents conforme à la revendication 1, caractérisé par le fait que les deux côtés latéraux du corps (2) sont recouverts d'une peau correspondante (4) et que le matériau destiné à la fabrication desdits peaux (4) est une mousse de polystyrène à haute densité initialement apliquée sous forme liquide sur le corps (2) du cure-dents.

3. Un cure-dents conforme à la revendication 1 ou 2, caractérisé par le fait que ladite pointe (3) est arrondie.

4. Un cure-dents conforme à toute revendication précédente, caractérisé par le fait que le moulage de la peau ou de chaque peau (4) près de l'extrémité pointue (3) du cure-dents se continue le long des bords opposés du corps (2) du cure-dents vers l'extrémité plate de celui-ci.

5. Un cure-dents conforme à la revendication 4, caractérisé par le fait que le moulage de la pointe (3) vers l'extrémité plate du cure-dents se continue sur une plus grande longueur sur un bord que sur l'autre bord de celui-ci.

6. Un cure-dents conforme à toute revendication précédente, caractérisé par le fait qu'il forme une partie intégrante d'un certain nombre de cure-dents essentiellement identiques dont les extrémités plates sont toutes raccordées à une languette de base commune (6).

7. Un cure-dents conforme à la revendication 6, caractérisé par le fait que son extrémité plate est raccordée à ladite languette de base commune par une ligne de performations (5).

8. Un cure-dents conforme à la revendication 6 ou 7, caractérisé par le fait que ledit nombre de cure-dents essentiellement identiques, dont il fait partie intégrante, est glissé dans une pochette protectrice (7).

9. Un cure-dents conforme à la revendication 8, caractérisé par le fait que ladite pochette (7) est en matériau pliable et offre une construction, une taille et une forme analogues à celles d'une "pochette d'alumettes".

10. Un cure-dents conforme à toute revendication précédente, caractérisé par le fait qu'il présente une épaisseur initiale hors compression latérale située essentiellement entre 2,0 mm et 3,0 mm.

FIG. 1.

FIG. 2.